# EUROPÄISCHE PATENTANMELDUNG

(11) **EP 1 514 764 A2**
(43) Veröffentlichungstag der Anmeldung: **16.03.2005**
(21) Anmeldenummer: 04019876.4
(22) Anmeldetag: 21.08.2004
(51) Int. Cl.: B62D 1/181

(54) **Kraftfahrzeuglenksäuleneinheit**

(30) Priorität: 09.09.2003 DE 10341419
(71) Anmelder: DaimlerChrysler AG, 70567 Stuttgart (DE)
(72) Erfinder: Gärtner, Stephan, 22589 Hamburg (DE); von Ey, Peter, 22607 Hamburg (DE)

(57) **Zusammenfassung**

Die Erfindung betrifft eine Kraftfahrzeuglenksäuleneinheit (1) mit einer Lenksäule (2), einer Verstellvorrichtung (3), die einen Längsverstellmechanismus (4) zur Längsverstellung der Lenksäule (2) und/oder einen Neigungsverstellmechanismus (5) zur Neigungsverstellung der Lenksäule (2) umfasst sowie mit einer elektrischen Antriebseinheit. Erfindungswesentlich ist dabei, dass die Verstellvorrichtung (3) ein zwischen wenigstens zwei Schaltstellungen mechanisch verstellbares zentrales Antriebsrad (8) aufweist, welches von der elektrischen Antriebseinheit (7) angetrieben ist und in wenigstens einer seiner Schaltstellungen mit dem einen oder mit dem anderen Verstellmechanismus (4, 5) antriebsgekoppelt ist.

## Beschreibung

Die Erfindung betrifft eine Kraftfahrzeuglenksäuleneinheit gemäß dem Oberbegriff des Anspruchs 1.

Aus der DE 196 41 152 C2 ist eine Kraftfahrzeuglenksäuleneinheit mit einem Lenksäulengehäuse und einer darin angeordneten Lenksäule sowie einer elektrisch angetriebenen Verstellvorrichtung zur Längsverstellung und Neigungsverstellung der Lenksäule bekannt. Diese Verstellvorrichtung umfasst eine elektrische Antriebseinheit zum Drehantrieb einer einteiligen Verstellspindel, mindestens zwei auf der Verstellspindel angeordnete, in Axialrichtung der Verstellspindel beweglich gelagerte Spindelmuttern und zur Längsbewegung bzw. Neigungsbewegung mindestens je einen Verstellmechanismus. Darüber hinaus weist die Verstellvorrichtung je Bewegungsrichtung eine Schaltvorrichtung auf, wobei zwischen der jeweiligen Schaltvorrichtung und der der Schaltvorrichtung benachbarten Spindelmutter eine kraftschlüssige Verbindung herstellbar ist. Die jeweiligen Verstellmechanismen zur Längsbewegung und zur Neigungsbewegung der Lenksäule werden von einer gemeinsamen Verstellspindel angetrieben, wobei die Ansteuerung der Verstellmechanismen separat durch die Ein- und Ausschaltung der an den Verstellmechanismen angeordneten Schaltvorrichtungen vorgenommen werden kann. Es entfällt somit eine komplette elektrische Antriebseinheit.

Die vorliegende Erfindung beschäftigt sich mit dem Problem für eine Kraftfahrzeuglenksäuleneinheit eingangs erwähnter Art, eine verbesserte Ausführungsform anzugeben, welche insbesondere Vorteile hinsichtlich Herstellkosten, Raumbedarf und Gewicht aufweist.

Diese Aufgabe wird durch den Gegenstand des unabhängigen Anspruchs gelöst, vorteilhafte Ausgestaltungen sind Gegenstand der abhängigen Ansprüche.

Die Erfindung beruht auf dem allgemeinen Gedanken, für eine Kraftfahrzeuglenksäuleneinheit mit einer Verstellvorrichtung, welche einen Längsverstellmechanismus zur Längsverstellung einer Lenksäule und/oder einen Neigungsverstellungsmechanismus zur Neigungsverstellung der Lenksäule umfasst, in der Verstellvorrichtung ein zwischen wenigstens zwei Schaltstellungen mechanisch verstellbares zentrales Antriebsrad vorzusehen. Dieses wird von einer elektrischen Antriebseinheit angetrieben und ist dabei in wenigstens einer seiner Schaltstellungen mit dem einen oder mit anderen Verstellmechanismus antriebsgekoppelt.

Um die Lenksäule entlang ihrer Achse in Längsrichtung zu verstellen bzw. die Neigung der Lenksäule zu verändern, wird das verstellbare zentrale Antriebsrad, welches von der elektrischen Antriebseinheit angetrieben ist, mechanisch, d.h. beispielsweise über einen an einer Lenkhandhabe angeordneten Hebel, in eine Schaltstellung verstellt und damit entweder mit dem Längsverstellmechanismus oder mit dem Neigungsverstellmechanismus wirkungsverbunden. Nach erfolgter Einstellung wird das zentrale Antriebsrad vom Verstellmechanismus antriebsentkoppelt und die Lenksäule in der neuen Stellung fixiert. Die Fixierung kann dabei beispielsweise mittels eines Sperrhebels oder aber günstigerweise durch eine selbsthemmende Ausbildung der Verstellmechanismen erfolgen.

Die erfindungsgemäße Lösung bietet somit den großen Vorteil, mit nur einer einzigen Antriebseinheit sämtliche vorhandene Verstellmechanismen anzutreiben. Hierdurch lassen sich erhebliche Reduzierungen bezüglich der Herstellkosten, des Gewichts sowie des Platzbedarfs der Kraftfahrzeuglenksäuleneinheit erzielen. Gleichzeitig wird aufgrund der reduzierten Anzahl von eingebauten Komponenten die Wartungsfreundlichkeit gesteigert sowie andererseits eine Ausfallwahrscheinlichkeit reduziert. Aufgrund der einfachen Bedienbarkeit der erfindungsgemäßen Kraftfahrzeuglenksäuleneinheit wird zudem ein hoher Bedienkomfort erreicht.

Das mechanisch verstellbare zentrale Antriebsrad ermöglicht ein einfaches Wechseln der Schaltstellungen, ohne dass hierfür teure elektronische Umschalteinheiten benötigt werden. Gleichzeitig kann durch den Entfall elektrischer bzw. elektronischer Komponenten bzw. deren Ersatz durch mechanische Komponenten die Zuverlässigkeit und Robustheit der Kraftfahrzeuglenksäuleneinheit deutlich gesteigert werden.

Darüber hinaus ist denkbar, dass die erfindungsgemäße Lösung in einer Standardversion lediglich einen Längsverstellmechanismus oder einen Neigungsverstellmechanismus umfasst. Bei höherwertigen Ausstattungslinien bzw. Versionen können dagegen beide Verstellmechanismen vorgesehen sein, so dass die erfindungsgemäße Lösung auch für den Einsatz bei Kraftfahrzeuglenksäulen-Baureihen vorgesehen werden kann. Dies wiederum vergrößert ein potentielles Einsatzgebiet und ermöglicht dadurch einen noch rationelleren Einsatz der Erfindung.

Gemäß einer bevorzugten Ausführungsform sind die zwei Schaltstellungen entgegengesetzten Verstellrichtungen der Längsverstellung zugeordnet und/oder die zwei Schaltstellungen sind entgegengesetzten Verstellrichtungen der Neigungsverstellung zugeordnet. Dies bietet den Vorteil, dass eine Antriebseinheit verwendet werden kann, welche das Antriebsrad lediglich in eine Drehrichtung antreibt und die Änderung der Verstellrichtung einfach durch Ändern der Schaltstellung des mechanisch verstellbaren zentralen Antriebsrades erfolgt. Eine Festlegung der Verstellrichtung kann dadurch rein mechanisch, beispielsweise über einen Hebel erfolgen, ohne dass über eine elektronische Steuereinheit die Drehrichtung der Antriebseinheit bzw. des Antriebsrades umgekehrt werden müsste.

Alternativ hierzu können nur zwei Schaltstellungen vorgesehen sein, wobei die eine Schaltstellung der Längsverstellung zugeordnet ist und die andere Schaltstellung der Neigungsverstellung zugeordnet ist. Hierbei ist erforderlich, dass die Antriebseinheit drehrichtungsumkehrbar ausgebildet ist und einen Schalter zur Drehrichtungsschaltung aufweist. Gemäß dieser Alternative ist zwar ein Drehrichtungsschalter erforderlich, anderseits können jedoch die Anzahl der Schaltstellungen halbiert werden, so dass eine Konstruktion der Kraftfahrzeuglenksäuleneinheit vereinfacht wird. Der Schalter zur Drehrichtungsschaltung bzw. die Drehrichtungsumkehr der Antriebseinheit ist dabei relativ einfach zu realisieren und bewirkt aufgrund der dadurch zumindest einen eingesparten Schaltstellung einerseits einen Kostenvorteil und andererseits Vorteile hinsichtlich des Platz- bzw. Raumbedarfs der Kraftfahrzeuglenksäuleneinheit.

Gemäß einer vorteilhaften Weiterbildung der Kraftfahrzeuglenksäuleneinheit mit nur zwei Schaltstellungen, kann der Schalter zur Drehrichtungsschaltung in den Hebel zum mechanischen Verstellen des zentralen Antriebsrades integriert sein. Dieser Hebel kann beispielsweise ergonomisch günstig an der Lenkhandhabe des Kraftfahrzeugs angeordnet sein und dadurch einhändig und einfach zeitgleich mit dem Hebel bedient werden, so dass ein hoher Bedienkomfort erreicht wird.

Entsprechend einer günstigen Ausführungsform der erfindungsgemäßen Lösung kann zumindest einer der Verstellmechanismen eine flexible Welle zur Kraftübertragung aufweisen. Dies bietet den Vorteil, dass die Verstellmechanismen nicht unmittelbar an der Verstellvorrichtung angeordnet sein müssen und dadurch an konstruktiv besonders günstigen Plätzen angeordnet werden können. Die flexible Welle gewährleistet dabei eine zuverlässige und spielfreie Kraftübertragung, wodurch sich eine Anzahl von Einbaupositionen der Verstellmechanismen deutlich steigern lässt.

Eine besonders vorteilhafte Ausführungsform der erfindungsgemäßen Lösung sieht vor, das zentrale Antriebsrad und eine Eingangsseite des jeweiligen Verstellmechanismus als komplementäre Zahnräder auszubilden. Zahnräder sind in der Getriebetechnik weit verbreitete, hoch präzise und zuverlässige Übertragungsmittel und können zudem kostengünstig und in nahezu beliebiger Ausführungsform hergestellt werden. Alternativ zu komplementären Zahnräder können das zentrale Antriebsrad und die Eingangsseite des jeweiligen Verstellmechanismus einen kraftübertragenden Belag aufweisen. Derartige kraftübertragende Beläge können beispielsweise rutschhemmende Beläge wie Gummi sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine Prinzipdarstellung einer erfindungsgemäßen Kraftfahrzeuglenksäuleneinheit,
- Fig. 2: eine Draufsicht auf eine erfindungsgemäße Verstellvorrichtung,
- Fig. 3: eine Darstellung wie in Fig. 2, jedoch bei einer Seitenansicht.

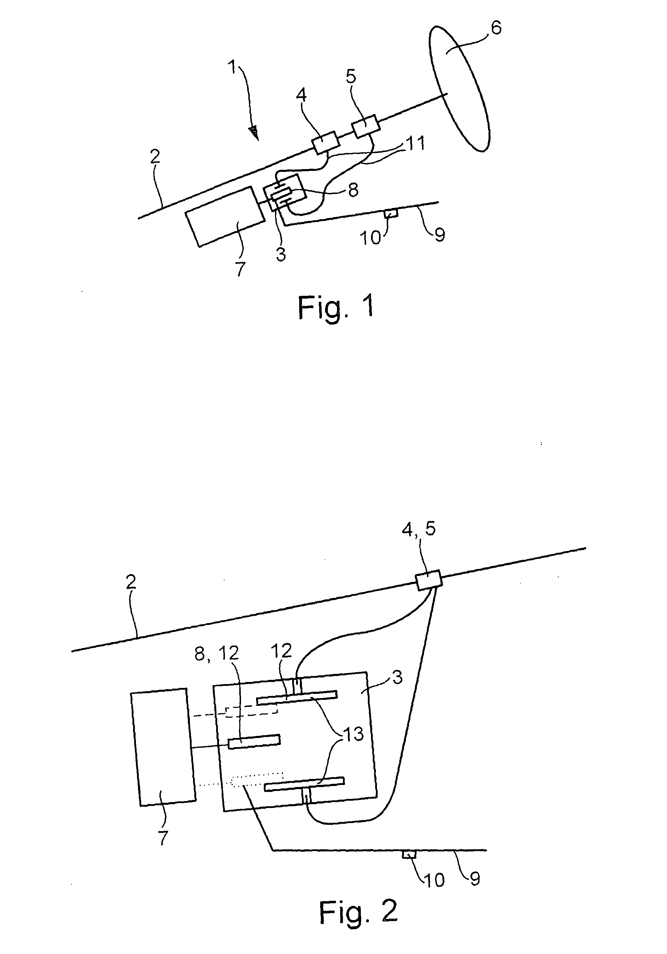

Entsprechend Fig. 1 weist eine erfindungsgemäße Kraftfahrzeuglenksäuleneinheit 1 eine Lenksäule 2 sowie eine Verstellvorrichtung 3 auf, welche einen Längsverstellmechanismus 4 zur Längsverstellung der Lenksäule 2 in deren Längsrichtung und/oder einen Neigungsverstellmechanismus 5 zur Neigungsverstellung der Lenksäule 2 umfasst. Die Verstellvorrichtung 3 ermöglicht eine optimale Anpassung einer Position einer Lenkhandhabe 6 an individuelle Anforderungen eines nicht dargestellten Fahrers.

Die Verstellvorrichtung 3 weist ein zwischen wenigstens zwei Schaltstellungen mechanisch verstellbares zentrales Antriebsrad 8 auf (vgl. Fig. 2), welches von einer elektrischen Antriebseinheit 7 angetrieben ist. Die Antriebseinheit 7 kann dabei ein herkömmlicher Elektromotor sein. Erfindungsgemäß kann das zentrale Antriebsrad 8 mechanisch derart verstellt werden, dass es in wenigstens einer seiner Schaltstellungen mit einem der beiden Verstellmechanismen 4 oder 5 antriebsgekoppelt ist.

Das Verstellen des zentralen Antriebsrades 8 in eine Schaltstellung bzw. in eine Ruhestellung, welche gemäß Fig. 2 zwischen den beiden Schaltstellungen liegt, erfolgt dabei über einen Stellhebel 9, welcher günstigerweise derart angeordnet ist, dass er leicht durch den Fahrer des Kraftfahrzeugs bedienbar ist. Die leichte Bedienbarkeit wird dabei beispielsweise durch eine Anordnung des Stellhebels 9 nahe der Lenkhandhabe 6 erreicht.

In der Ruhestellung ist das zentrale Antriebsrad 8 von den Verstellmechanismen 4, 5 antriebsentkoppelt, so dass keine Längsverstellung bzw. Neigungsverstellung der Lenksäule 2 erfolgt. Das zentrale Antriebsrad 8 kann dabei entweder permanent, d.h. auch in der Ruhestellung, durch die Antriebseinheit 7 angetrieben werden, oder aber erst bei einem Verfahren desselben in eine Schaltstellung. Bei einer ein- und ausschaltbaren Antriebseinheit 7 kann die Ruhestellung grundsätzlich entfallen.

Generell sind für die Verstellvorrichtung 3 mehrere Ausgestaltungsformen denkbar. Gemäß Fig. 2 ist eine Variante dargestellt, bei welcher die zwei Schaltstellungen entgegengesetzten Verstellrichtungen der Längsverstellung bzw. des Längsverstellmechanismus 4 und/oder der Neigungsverstellung bzw. des Neigungsverstellmechanismus 5 zugeordnet sind. Eine derartige Ausführungsform ermöglicht es, dass die Antriebseinheit 7 das Antriebsrad 8 lediglich in eine Drehrichtung antreibt. Eine Umkehr der Verstellrichtung der Längsverstellung bzw. der Neigungsverstellung wird somit durch ein Verstellen des Antriebsrades 8 aus einer ersten Schaltstellung (unterbrochen gezeichnet Linie) über die Ruhestellung (durchgezogene Linie) in eine zweite Schaltstellung (punktierte Linie) oder umgekehrt bewerkstelligt.

Dem gegenüber können gemäß der exemplarischen Darstellung in Fig. 1 aber auch nur zwei Schaltstellungen vorgesehen sein, wobei die eine Schaltstellung der Längsverstellung zugeordnet ist und die andere Schaltstellung der Neigungsverstellung zugeordnet ist. Diese Ausführungsform bedingt eine drehrichtungsumkehrbare Ausbildung der Antriebseinheit 7 und somit ein drehrichtungsumkehrbares Antriebsrad 8. Zur Drehrichtungsschaltung ist ein Schalter 10 vorgesehen, welcher günstigenfalls in den Stellhebel 9 integriert ist (vgl. Fig. 1 und 2) und dadurch die Funktionalität des Stellhebels 9 steigert. Denkbar ist aber auch ein Anordnung des Schalters 10 an einer anderen ergonomisch günstigen Stelle an der Lenkhandhabe 6 oder an einem anderen Teil eines nicht dargestellten A-maturenbrettes.

Gemäß Fig. 1 und Fig. 2 weisen die Verstellmechanismen 4 und 5 jeweils eine flexible Welle 11 zur Kraftübertragung auf. Dies ermöglicht, dass der Längsverstellmechanismus 4 und/oder der Neigungsverstellmechanismus 5 unabhängig von der Position der Verstellvorrichtung 3 an der Lenksäule 2 angeordnet werden können. Hierdurch ist es möglich, die an sich kompakte Verstellvorrichtung 3 in mehrere Baugruppen aufzuteilen und diese unabhängig voneinander an besonders günstigen Einbaustellen anzuordnen. Darüber hinaus wird hierdurch die Möglichkeit geschaffen, unterschiedliche Kraftfahrzeuglenksäuleneinheiten 1 für verschiedene Baureihen herzustellen, beispielsweise in einer Standardversion, bei welcher lediglich ein Verstellmechanismus 4 oder 5 vorgesehen ist, und in eine höherwertige Version, bei der beide Verstellmechanismen 4 und 5 vorgesehen sind. Um die Kraftfahrzeuglenksäuleneinheit 1 von der Standardversion auf die höherwertige Version umzurüsten, bedarf es lediglich des Anschlusses des zweiten Verstellmechanismus 4 oder 5 über die flexible Welle 11 an die Verstellvorrichtung 3, sofern diese für einen Anschluss des zweiten Verstellmechanismus 4 oder 5 vorbereitet ist.

Zum Betätigen des Stellhebels 9 bzw. beim Verstellen des Antriebsrades 8 in eine Schaltstellung, in welcher dieses mit dem Verstellmechanismus 4 oder 5 antriebsgekoppelt ist, ist eine kraftübertragende Verbindung zwischen dem zentralen Antriebsrad 8 und einer Eingangsseite 13 des jeweiligen Verstellmechanismus 4 oder 5 erforderlich. Hierbei kann gemäß einer möglichen Ausführungsform vorgesehen sein, das zentrale Antriebsrad 8 und die Eingangsseite 13 des jeweiligen Verstellmechanismus 4 oder 5 als komplementäre Zahnräder 12 auszubilden. Diese werden durch Betätigen des Stellhebels 9 in Eingriff gebracht und bewirken dadurch eine kraftübertragende Verbindung zwischen dem zentralen Antriebsrad 8 und der Eingangsseite 13 des jeweiligen Verstellmechanismus 4 oder 5.

Alternativ ist denkbar, dass das zentrale Antriebsrad 8 und die Eingangsseite 13 des jeweiligen Verstellmechanismus 4 oder 5 einen kraftübertragenden Belag, beispielsweise einen rutschfesten Belag aus Gummi, aufweisen. Auch hierdurch wird zwischen dem zentralen Antriebsrad 8 und dem Verstellmechanismus 4 oder 5 beim Verstellen in eine Schaltstellung eine kraftschlüssige Verbindung erreicht.

Wesentlich ist hierbei, dass mit Hilfe des Stellhebels 9 die Schaltstellungen des zentralen Antriebsrads 8 schaltbar sind, in denen des mit den Eingangsseiten 13 des jeweiligen Verstellmechanismus 4, 5 in Eingriff kommt. Dabei kommt es nicht darauf an, ob mit dem Stellhebel 9 das zentrale Antriebsrad 8 gegen ortsfeste Eingangsseiten 13 bewegt wird oder ob umgekehrt die Eingangsseiten 13 gegen das ortsfeste zentrale Antriebsrad 8 verstellt werden.

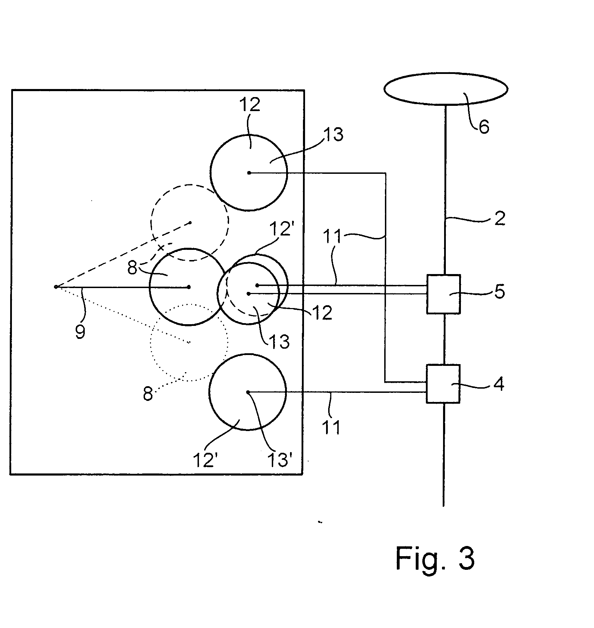

Gemäß Fig. 3 ist eine weitere Ausführungsvariante der Verstellvorrichtung 3 gezeigt. Zum Betätigen des Längsverstellmechanismus 4 wird hier das stets in gleiche Drehrichtung drehende zentrale Antriebsrad 8 von der Ruhestellung (durchgezogene Linie) in die erste Schaltstellung (unterbrochen gezeichnet Linie) verstellt. In dieser Stellung ist das Antriebsrad 8 antriebsgekoppelt mit der Eingangsseite 13, beispielsweise dem Zahnrad 12, des Längsverstellmechanismus 4. Ist die Verstellung erfolgt, wird das zentrale Antriebsrad 8 von der ersten Schaltstellung (gestrichelte bzw. unterbrochen gezeichnete Linie) in die Ruhestelle (durchgezogene Linie) überführt. Um die Verstellrichtung umzukehren, wird das zentrale Antriebsrad 8 in die zweite Schaltstellung (punktierte Linie) verstellt und dadurch beispielsweise mit einem weiteren Zahnrad 12' an der Eingangsseite 13 des Längsverstellmechanismus 4 antriebsverbunden.

Um den Neigungsverstellmechanismus 5 zu betätigen, wird gemäß Fig. 3 das zentrale Antriebsrad 8, in dessen bezüglich des Längsverstellmechanismus 4 liegenden Ruhestellung, senkrecht zur Bildebene verstellt. Hierdurch wird das Antriebsrad 8 entweder mit dem Zahnrad 12 oder 12', welche beide eingangsseitig an dem Neigungsverstellmechanismus 5 angeordnet sind antriebsverbunden. Um eine Umkehr der Verstellrichtung des Neigungsverstellmechanismus 5 zu bewirken, wird das Antriebsrad 8 aus einer in die Bildebene gedrückten Stellung (antriebsverbunden mit Zahnrad 12') in eine aus der Bildebene herausgezogene Stellung (antriebsverbunden mit dem Zahnrad 12) überführt. Zwischen der antriebsverbundenen Stellung des Antriebsrades 8 mit dem Zahnrad 12 und der antriebsverbundenen Stellung des Antriebsrades 8 mit dem Zahnrad 12' liegt die Ruhestellung, in welcher der Neigungsverstellmechanismus 5 nicht betätigt wird.

Ähnlich den Fig. 1 und 2 weisen auch in Fig. 3 der Längsverstellmechanismus 4 und der Neigungsverstellmechanismus 5 flexible Wellen 11 zur Kraftübertragung auf.

Zusammenfassend lassen sich die wesentlichen Merkmale der erfindungsgemäßen Lösung wie folgt charakterisieren:

Die Erfindung schlägt vor, für eine Kraftfahrzeuglenksäuleneinheit 1 eine Verstellvorrichtung 3 vorzusehen, mit welcher eine Längsverstellung bzw. eine Neigungsverstellung einer Lenksäule 2 bewirkt werden kann und welche ein zwischen wenigstens zwei Schaltstellungen mechanisch verstellbares zentrales Antriebsrad 8 aufweist, das von einer elektrischen Antriebseinheit 7 angetrieben wird. Das zentrale Antriebsrad 8 ist dabei in wenigstens einer seiner Schaltstellungen mit dem einen oder mit dem anderen Verstellmechanismus 4 oder 5 antriebsgekoppelt.

Die erfindungsgemäße Lösung bietet dadurch den Vorteil, mit nur einer einzigen Antriebseinheit 7 mehrere Verstellmechanismen 4, 5 anzutreiben, wodurch eine zusätzliche Antriebseinheit entfallen kann und Kosten eingespart werden können. Gleichzeitig sind die Verstellmechanismen 4 und 5 separat von der Verstellvorrichtung 3 angeordnet und über flexible Wellen 11 mit dieser verbunden, so dass diese unabhängig von der Lage der Verstellvorrichtung 3 an der Lenksäule 2 angeordnet werden können. Dadurch bietet sich auch die Möglichkeit, verschiedene Baureihen, beispielsweise Standardversion oder Vollversion der Kraftfahrzeuglenksäuleneinheit 1, herzustellen und gemäß einem gewünschten Ausstattungsumfang des herzustellenden Kraftfahrzeuges einzubauen.

Die Verstellung des Antriebsrades 8 in eine Schaltstellung erfolgt über einen mechanischen Hebel 9, so dass auf anfällige und teuere Schaltelektronik verzichtet werden kann.

## Patentansprüche

1. Kraftfahrzeuglenksäuleneinheit (1) mit
- einer Lenksäule (2),
- einer Verstellvorrichtung (3), die einen Längsverstellmechanismus (4) zur Längsverstellung der Lenksäule (2) und/oder einen Neigungsverstellmechanismus (5) zur Neigungsverstellung der Lenksäule (2) umfasst,
- einer elektrischen Antriebseinheit (7),
**dadurch gekennzeichnet ,**
- **dass** die Verstellvorrichtung (3) ein zwischen wenigstens zwei Schaltstellungen mechanisch verstellbares zentrales Antriebsrad (8) aufweist, welches von der elektrischen Antriebseinheit (7) angetrieben ist,
- **dass** das zentrale Antriebsrad (8) in wenigstens einer seiner Schaltstellungen mit dem einen oder mit dem anderen Verstellmechanismus (4, 5) antriebsgekoppelt ist.

2. Kraftfahrzeuglenksäuleneinheit nach Anspruch 1,
**dadurch gekennzeichnet,**
- **dass** die zwei Schaltstellungen entgegengesetzten Verstellrichtungen der Längsverstellung zugeordnet sind und/oder
- **dass** die zwei Schaltstellungen entgegengesetzten Verstellrichtungen der Neigungsverstellung zugeordnet sind.

3. Kraftfahrzeuglenksäuleneinheit nach Anspruch 2,
**dadurch gekennzeichnet,**
**dass** die Antriebseinheit (7) das Antriebsrad (8) lediglich in eine Drehrichtung antreibt.

4. Kraftfahrzeuglenksäuleneinheit nach einem der Ansprüche 1 bis 3,
**dadurch gekennzeichnet,**
- **dass** zumindest eine der Schaltstellungen der Längsverstellung zugeordnet ist und
- **dass** zumindest eine der Schaltstellungen der Neigungsverstellung zugeordnet ist.

5. Kraftfahrzeuglenksäuleneinheit nach Anspruch 1,
**dadurch gekennzeichnet,**
- **dass** nur zwei Schaltstellungen vorgesehen sind,
- **dass** die eine Schaltstellung der Längsverstellung zugeordnet ist, wogegen die andere Schaltstellung der Neigungsverstellung zugeordnet ist,
- **dass** die Antriebseinheit (7) drehrichtungsumkehrbar ausgebildet ist und einen Schalter (10) zur Drehrichtungsschaltung aufweist.

6. Kraftfahrzeuglenksäuleneinheit nach einem der Ansprüche 1 bis 5,
**dadurch gekennzeichnet,**
**dass** die Verstellvorrichtung einen Hebel (9) zum mechanischen Verstellen des zentralen Antriebsrads (8) aufweist.

7. Kraftfahrzeuglenksäuleneinheit nach den Ansprüchen 5 und 6,
**dadurch gekennzeichnet,**
**dass** der Schalter (10) zur Drehrichtungsschaltung in den Hebel (9) integriert ist.

8. Kraftfahrzeuglenksäuleneinheit nach einem der Ansprüche 1 bis 7,
**dadurch gekennzeichnet,**
**dass** wenigstens einer der Verstellmechanismen (4, 5) eine flexible Welle (11) zur Kraftübertragung aufweist.

9. Kraftfahrzeuglenksäuleneinheit nach einem der Ansprüche 1 bis 8,
**dadurch gekennzeichnet,**
**dass** das zentrale Antriebsrad (8) und eine Eingangsseite (13) des jeweiligen Verstellmechanismus (4, 5) als komplementäre Zahnräder (12) ausgebildet sind.

10. Kraftfahrzeuglenksäuleneinheit nach einem der Ansprüche 1 bis 8,
**dadurch gekennzeichnet,**
**dass** das zentrale Antriebsrad (8) und eine Eingangsseite (13) des jeweiligen Verstellmechanismus (4, 5) einen kraftübertragenden Belag aufweisen.
